# EUROPEAN PATENT SPECIFICATION

(11) **EP 0 800 432 B1**
(45) Date of publication and mention of the grant of the patent: **06.05.1999**
(21) Application number: 96901566.8
(22) Date of filing: 02.01.1996
(51) Int. Cl.: B23H 3/04

(54) **ELECTRODE FOR ELECTROCHEMICAL MACHINING, METHOD OF ELECTROCHEMICAL MACHINING WITH SAID ELECTRODE, A BEARING AND A METHOD OF DETERMINING A PROFILE USING SAID ELECTRODE**
ELEKTRODE FÜR ELEKTROCHEMISCHE BEARBEITUNG,ELEKTROCHEMISCHESBEARBEITUNGSVERFAHREN ,LAGER UND VERFAHREN ZUR BESTIMMUNG EINES PROFILS
ELECTRODE POUR USINAGE ELECTROCHIMIQUE, PROCEDE D'USINAGE ELECTROCHIMIQUE A L'AIDE DE LADITE ELECTRODE, PALIER ET PROCEDE DE DETERMINATION D'UN PROFIL A L'AIDE DE LADITE ELECTRODE

(30) Priority: 28.12.1994 US 365722
(43) Date of publication of application: 15.10.1997
(73) Proprietor: SKF INDUSTRIAL TRADING & DEVELOPMENT COMPANY B.V., 3439 MT Nieuwegein (NL)
(72) Inventor: WARDLE, Frank, Peter, Swindon SN6 7SA (GB)
(74) Representative: Kupecz, Arpad
(86) International application number: NL9600001
(87) International publication number: WO9620061

(56) References cited:
- DE-A- 1 515 195
- FR-A- 2 005 780
- US-A- 4 541 909
- PATENT ABSTRACTS OF JAPAN vol. 010, no. 172 (C-354), 18 June 1986 & JP,A,61 023796 (KATSUKAWA KOGYO KK), 1 February 1986,

## Description

The present invention relates to an electrode for electrochemical machining, said electrode comprising a plurality of electrode segments, said electrode segments being separated from each other and having a electrically non-insulating end for facing a metal piece to be electrochemically machined, the electrode segments being separated from each other by an electrically insulating layer.

Such an electrode is known from the German patent application DE 1.515.195. Fig. 3 and 4 show an electrode comprising electrode segments, each electrode segment being connected to a power source. The current through each electrode segment can be controlled independently from the other electrode segments. The electrode segments have a rectangular cross-section.

The object of the present invention is to provide an electrode which allows for controlled and flexible electrochemical machining resulting in a smooth curvature of the metal piece with a limited number of electrode segments.

To this end the electrode according to the invention is characterized in that the intersection of the insulating layer and the non-insulated end of the electrode segment is, over at least part of its length, inclined to the nearest side walls of the electrode.

Such an electrode allows the application of different voltages to different electrode segments relative to the metal piece to be machined resulting in a smoothly electrochemically machined metal piece with a limited number of electrode segments.

US 4.541.909 describes an electrode for electrochemical machining wherein said electrode comprises a plurality of electrode segments without an electrically insulating layer between the electrode segments.

The invention also relates to a method of electrochemical machining a metal piece using an electrode comprising a plurality of electrode segments, wherein different current densities are applied to each of the electrode segments of the electrode, depending on the amount of material to be removed at a particular site of the metal piece facing a corresponding non-insulated end of the electrode segment.

This method is characterized in that an electrode according to the invention is used wherein the intersection of the insulating layer and the non-insulated end of the electrode segment is, over at least part of its length, inclined to the direction in which the electrode and the metal piece move relatively to each other.

Thus the method according to the invention provides for an electrochemical machining process resulting in a metal piece having a smoothly curved surface.

Finally the invention relates to a method of measuring the profile of a metal piece, being characterized in that an electrode comprising a plurality of electrode segments according to the invention is put above the surface of the metal piece, forming a gap which is filled with an electrically conducting fluid, and the resistance over the gap is measured for each of the segments.

The invention will now be elucidated with the aid of the drawing, illustrating the invention by way of example.
Fig. 1 is a cross section of an electrode according to the invention.
Fig. 2 is a side view of the electrode and half of a cylindrical rotating body.
Fig. 3 shows the current density as experienced by cylindrical rotating body of Fig. 2.

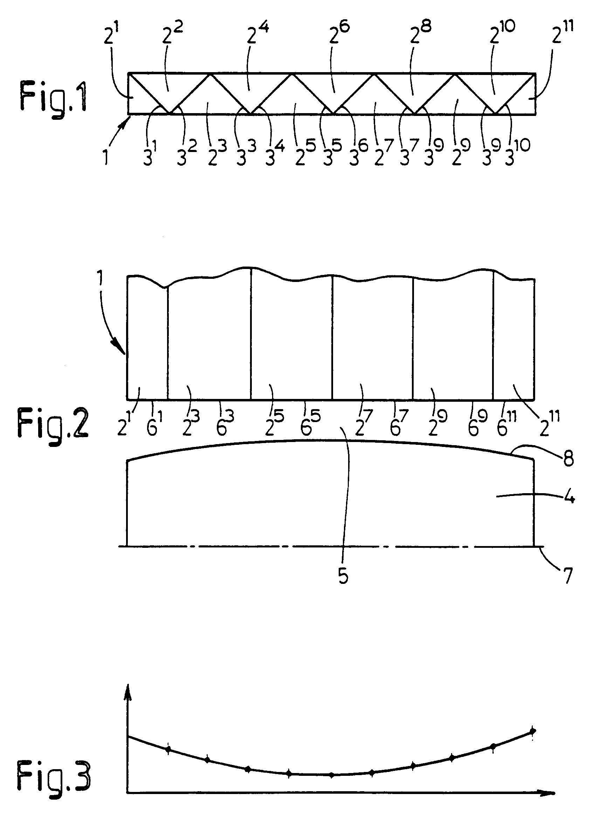

Fig. 1 shows an electrode 1 for electrochemical machining, which electrode comprises electrode segments 2¹ to 2¹¹ which are separated on the sides of the electrode segments by an electrically insulating layer 3¹ to 3¹⁰. The electrode 1 is covered with an electrically insulating layer, leaving the end of each electrode segment free of electrically insulating material for machining the metal piece to be electrochemically machined and contact means (not shown) for applying a voltage to each of the electrode segments 2.

Fig. 2 shows a side view of a part of the electrode 1 shown in Fig. 1. The metal piece to be electrochemically machined is here a cylindrical rotating body, roller 4 (partially shown), for a cylindrical roller bearing, which cylindrical roller 4 is spaced from the electrode 1 forming a gap 5 through which electrolyte is passed. As shown in Fig. 2, non-insulating ends 6¹ to 6¹¹ (uneven shown) of the electrode segments 2 face the cylindrical roller 4 and lie in one plane. More specifically the plane is a flat surface. This means that such an electrode 1 is easy and cheap to manufacture and this geometry is possible due to the fact that the voltage over the gap 5 can be chosen for each electrode segment 2 separately.

To electrochemically machine the cylindrical roller 4, it is rotated around the axis indicated with numeral 7 and the non-insulated ends 6 of the electrode segments 2 form a narrow blade.

Cylindrical rollers 4 in a cylindrical roller bearing are more strained at the surfaces of the cylinder near the ends of the cylindrical roller 4. To spread the load over the full cylindrical surface the roller 4 must be of a slightly smaller diameter near the ends of the roller 4. To this end the voltage applied to the electrode segments 2 is increased towards the outer electrode segments 2¹ and 2¹¹ respectively. Thus the current density and hence the amount of material removed from the cylindrical roller 4 is increased near its ends. The resulting profile 8 shown in Fig. 2 is highly exaggerated. Usually the difference in diameter between the centre and the ends of the roller 4 is in the order of microns or tens of microns.

As the electrode 1 and the metal piece are rotated relatively to each other while being parallel to each other, and while different voltages are applied to the electrode segments 2, and as the intersections of the insulating layers 3 and the non-insulated ends 6 of the electrode segments 2 are, over at least part of their lengths, inclined to the direction in which the electrode 1 and the metal piece 2 move relatively to each other, this results in a smooth variation of the current density (as shown in Fig. 3) over the length of the cylindrical roller 4. Thus it is possible to obtain a smooth curvature of the metal piece with a limited number of electrode segments 2.

For a smooth variation it is preferred that the insulating layers 3 of the different electrode segment sides meet each other.

The particular design of the electrode 1 according to the invention enables the workpiece form to be measured and hence can produce an accurate form irrespective of the initial form of the workpiece. With the currently used, single piece conforming electrodes, the initial workpiece form must be carefully controlled and the machining time and current carefully matched to the required form.

Measurement of the workpiece form is achieved by measuring the resistance of the gap local to each segment 2 of the electrode 1. The resistance is proportional to the local gap width 5, so by comparing the local resistance measurements of adjacent segments 2, the workpiece profile can be determined. As desired the electrode may be moved relatively to the metal piece. Thus the invention allows the determination of the profile of a metal piece.

## Claims

1. Electrode for electrochemical machining, said electrode (1) comprising a plurality of electrode segments (2), said electrode segments (2) being separated from each other and having a electrically non-insulating end (6) for facing a metal piece to be electrochemically machined, the electrode segments (2) being separated from each other by an electrically insulating layer (3), **characterized** in that the intersection of the insulating layer (3) and the non-insulated end (6) of the electrode segment (2) is, over at least part of its length, inclined to the nearest side walls of the electrode (1).

2. Electrode according to claim 1, **characterized** in that the non-insulating ends (6) of the plurality of electrode segments (2) lie substantially in one plane.

3. Electrode according to claim 2, **characterized** in that the plane is a flat surface.

4. Electrode according to any of the preceding claims, **characterized** in that the non-insulating ends (6) of the electrode segments (2) form a narrow blade.

5. Electrode according to any of the preceding claims, **characterized** in that the insulating layers (3) of different electrode segment sides meet each other.

6. Method of electrochemical machining a metal piece using an electrode comprising a plurality of electrode segments, wherein different current densities are applied to each of the electrode segments of the electrode, depending on the amount of material to be removed at a particular site of the metal piece facing a corresponding non-insulated end of the electrode segment, **characterized** in that an electrode (1) according to any of the claims 1 to 5 is used wherein the intersection of the insulating layer (3) and the non-insulated end (6) of the electrode segment (2) is, over at least part of its length, inclined to the direction in which the electrode (1) and the metal piece move relatively to each other.

7. Method according to claim 6, **characterized** in that the metal piece is a bearing ring.

8. Method according to one of the claims 6 to 7, **characterized** in that the metal piece is a cylindrical rotating body.

9. Method of measuring the profile of a metal piece, **characterized** in that an electrode (1) comprising a plurality of electrode segments (2) according to any of the claims 1 to 5 is put above the surface of the metal piece, forming a gap (5) which is filled with an electrically conducting fluid, and the resistance over the gap (5) is measured for each of the segments.

## Patentansprüche

1. Elektrode für elektrochemische Bearbeitung, wobei die Elektrode (1) eine Vielzahl von Elektrodensegmenten (2) aufweist, wobei die Elektrodensegmente (2) voneinander getrennt sind, und ein elektrisch nicht isolierendes Ende (6) besitzen, das einem elektrochemisch zu bearbeitenden Metallstück gegenüberliegt, wobei die Elektrodensegmente (2) voneinander durch eine elektrisch isolierende Schicht (3) getrennt sind, dadurch gekennzeichnet, daß die Schnittlinie der isolierenden Schicht (3) und des nicht-isolierenden Endes (6) des Elektrodensegments (2) über wenigstens einen Teil ihrer Länge hin zu den nächstgelegenen Seitenwandungen der Elektrode (1) geneigt ist.

2. Elektrode nach Anspruch 1, dadurch gekennzeichnet, daß die nicht-isolierenden Enden (6) der Vielzahl von Elektrodensegmenten (2) im wesentlichen in einer Ebene liegen.

3. Elektrode nach Anspruch 2, dadurch gekennzeichnet, daß die Ebene eine flache Oberfläche ist.

4. Elektrode nach einem der vorangehenden Ansprüche, dadurch gekennzeichnet, daß die nicht-isolierenden Enden (6) des Elektrodensegments (2) eine enge Schneideeinrichtung bilden.

5. Elektrode nach einem der vorangehenden Ansprüche, dadurch gekennzeichnet, daß die isolierenden Schichten (3) der verschiedenen Elektrodensegmentseiten aufeinandertreffen.

6. Verfahren zur elektrochemischen Bearbeitung eines Metallstücks, bei dem eine Elektrode mit einer Vielzahl von Elektrodensegmenten verwendet wird, wobei die unterschiedlichen Stromdichten an jede der Elektrodensegmente der Elektrode in Abhängigkeit von der Materialmenge angelegt werden, die an einer bestimmten Stelle des Metallstücks zu entfernen ist, die einem entsprechenden, nicht isolierten Ende des Elektrodensegments gegenüberliegt, dadurch gekennzeichnet, daß eine Elektrode (1) nach einem der Ansprüche 1 bis 5 verwendet wird, wobei die Schnittlinie der isolierenden Schicht (3) und des nicht-isolierenden Endes (6) des Elektrodensegments (2) entlang wenigstens eines Teils ihrer Länge hin zu der Richtung, in der die Elektrode (1) und das Metallstück sich relativ zueinander bewegen, geneigt liegt.

7. Verfahren nach Anspruch 6, dadurch gekennzeichnet, daß das Metallstück ein Lagerring ist.

8. Verfahren nach einem der Ansprüche 6 bis 7, dadurch gekennzeichnet, daß das Metallstück ein zylindrischer Drehkörper ist.

9. Verfahren zur Messung des Profils eines Metallstücks, dadurch gekennzeichnet, daß eine Elektrode (1) mit einer Vielzahl von Elektrodensegmenten (2) gemäß einem der Ansprüche 1 bis 5 oberhalb der Oberfläche des Metallstücks vorgesehen wird, wobei ein Spalt (5) gebildet wird, welcher mit einer elektrisch leitenden Flüssigkeit gefüllt wird, und der Widerstand über den Spalt (5) für jedes der Segmente gemessen wird.

## Revendications

1. Electrode pour usinage électrochimique, ladite électrode (1) comprenant une pluralité de segments d'électrode (2), lesdits segments d'électrode (2) étant séparés les uns des autres et ayant des extrémités (6) électriquement non isolantes pour faire face à une pièce de métal devant être usinée électrochimiquement, les segments d'électrode (2) étant séparés les uns des autres par une couche électriquement isolante (3), caractérisée en ce que l'intersection de la couche isolante (3) et des extrémités non isolantes (6) du segment d'électrode (2) est, sur au moins une partie de sa longueur, inclinée vers les parois latérales les plus proches de l'électrode (1).

2. Electrode selon la revendication 1, caractérisée en ce que les extrémités non isolantes (6) de la pluralité de segments d'électrode (2) s'étendent sensiblement selon un plan.

3. Electrode selon la revendication 2, caractérisée en ce que le plan est une surface plane.

4. Electrode selon l'une quelconque des revendications précédentes, caractérisée en ce que les extrémités non isolantes (6) des segments d'électrode (2) forment une lame étroite.

5. Electrode selon l'une quelconque des revendications précédentes, caractérisée en ce que les couches isolantes (3) de parois de segments d'électrode différents se rencontrent les unes des autres.

6. Procédé d'usinage électrochimique d'une pièce de métal utilisant une électrode comprenant une pluralité de segments d'électrode, dans lequel différentes densités de courant sont appliquées à chacun des segments d'électrode de l'électrode, en fonction d'une quantité de matériaux devant être supprimée en un emplacement particulier de la pièce de métal faisant face à une extrémité non isolée correspondante du segment d'électrode, caractérisé en ce qu'une électrode (1) selon l'une quelconque des revendications 1 à 5 est utilisée, dans laquelle l'intersection de la couche isolante (3) et de l'extrémité non isolée (6) du segment d'électrode (2) est, sur au moins une partie de sa longueur, inclinée dans la direction dans laquelle l'électrode (1) et la pièce de métal se déplacent l'une par rapport à l'autre.

7. Procédé selon la revendication 6, caractérisé en ce que la pièce de métal est une couronne d'appui.

8. Procédé selon l'une des revendications 6 et 7, caractérisé en ce que la pièce de métal est un corps rotatif cylindrique.

9. Procédé de mesure du profil d'une pièce de métal, caractérisé en ce qu'une électrode (1) comportant une pluralité de segments d'électrode (2) selon l'un quelconque des revendications 1 à 5 est disposée au-dessus de la surface de la pièce de métal, en formant un espace (5) qui est empli d'un fluide électriquement conducteur, et la résistance au-dessus de l'espace (5) est mesurée pour chacun des segments.
